# EUROPÄISCHE PATENTSCHRIFT

(11) **EP 3 334 635 B1**
(45) Veröffentlichungstag und Bekanntmachung des Hinweises auf die Patenterteilung: **11.09.2019**
(21) Anmeldenummer: 16739190.3
(22) Anmeldetag: 18.07.2016
(51) Int. Cl.: B62D 1/16

(54) **SICHERUNGSVORRICHTUNG FÜR EINE WELLENANORDNUNG UND VERFAHREN ZUR ZEITWEILIGEN EINSCHRÄNKUNG DER BEWEGUNGSFREIHEIT EINES UNIVERSALGELENKS**
SECURING DEVICE FOR A SHAFT ARRANGEMENT AND METHOD FOR TEMPORARILY LIMITING THE FREEDOM OF MOVEMENT OF A UNIVERSAL JOINT
DISPOSITIF DE SÉCURITÉ POUR UN ENSEMBLE D'ARBRES ET PROCÉDÉ PERMETTANT DE LIMITER TEMPORAIREMENT LA LIBERTÉ DE MOUVEMENT D'UN JOINT DE CARDAN

(30) Priorität: 11.08.2015 DE 102015215290
(43) Veröffentlichungstag der Anmeldung: 20.06.2018
(73) Patentinhaber: ThyssenKrupp Presta AG, 9492 Eschen (LI); thyssenkrupp AG, 45143 Essen (DE)
(72) Erfinder: SILBER, Michael, 70376 Stuttgart (DE); VELADZIC, Elvira, 9469 Haag SG (CH); KÖB, Tobias, 6912 Hörbranz (AT); SEGATTO, Felipe, 7000 Chur (CH)
(74) Vertreter: thyssenkrupp Intellectual Property GmbH
(86) Internationale Anmeldenummer: PCT/EP2016/067067
(87) Internationale Veröffentlichungsnummer: WO 2017/025279

(56) Entgegenhaltungen:
- EP-A1- 0 727 341

## Beschreibung

### Stand der Technik

Die Erfindung betrifft eine Sicherungsvorrichtung zur zeitweiligen Einschränkung der Bewegungsfreiheit eines Universalgelenks einer Wellenanordnung einer Lenksäule, umfassend ein Riegelelement, welches sich in einer Längsrichtung erstreckt und in Längsrichtung vorne ein freies vorderes Ende aufweist, und an dem in Längsrichtung hinten ein Handhabungsmittel angeordnet ist, wobei das Riegelelement einen Blockierkörper aufweist und mindestens ein Positionierelement, welches sich benachbart zum Blockierkörper in Längsrichtung erstreckt und in einer Querrichtung quer Längsrichtung relativ zum Blockierkörper federnd ausgebildet ist. Ein Verfahren zur zeitweiligen Einschränkung des Bewegungsfreiheit eines Universalgelenks ist ebenfalls Gegenstand der Erfindung.

In Lenksystemen von Kraftfahrzeugen wird das in das Lenkrad eingebrachte Lenkmoment über die Lenkwelle in das Lenkgetriebe eingeleitet. Die Lenkwelle ist zum Ausgleich des Winkelversatzes als Gelenkwelle ausgebildet und weist in der Regel eine Lenkzwischenwelle auf, die über jeweils ein Universalgelenk mit der lenkradseitigen Lenkspindel und der Eingangswelle des Lenkgetriebes verbunden ist. Eine derartige Anordnung ist beispielsweise aus der DE 10 2008 041 153 A1 bekannt.

Universalgelenke, auch als Kreuzgelenke bezeichnet, ermöglichen die gegenseitige Verschwenkung der miteinander gelenkig verbundenen Wellenteile um zwei senkrecht zueinander stehende Gelenkachsen der Gelenkzapfen eines Zapfenkreuzes, wobei die sich kreuzenden Gelenkachsen in der Ebene des Zapfenkreuzes liegen. Die beiden auf der ersten Gelenkachse liegenden Gelenkzapfen sind um die erste Gelenkachse drehbar in den sich paarweise gegenüberliegenden Gabelarmen einer ersten Gelenkgabel gelagert, die mit dem einen Wellenteil verbunden ist. Entsprechend sind die zweiten Gelenkzapfen um die zweite Gelenkachse drehbar in den sich ebenfalls paarweise gegenüberliegenden Gabelarmen einer zweiten Gelenkgabel drehbar gelagert, die mit dem zweiten Wellenteil verbunden ist.

Die freie Beweglichkeit der Wellenteile in einem vorgegebenen Winkelbereich ist für die Übertragung des Drehmoments erforderlich. Bei der Montage der Lenksäule in einem Kraftfahrzeug kann dadurch jedoch der Fall eintreten, dass die Wellenteile bezüglich einer Gelenkachse stärker als in Einbaulage vorgesehen abgewinkelt werden, beispielsweise im rechten oder spitzen Winkel zueinander stehen, und gleichzeitig um die andere Gelenkachse gegeneinander rotiert werden. Dadurch können die Gelenkgabeln gegeneinander anschlagen und beschädigt werden. Wird in einer ungünstigen Winkelstellung ein Drehmoment ausgeübt, kann darüber hinaus die Lagerung der Gelenkzapfen beschädigt werden.

Um Schäden durch ungünstige Relativbewegungen der Wellenteile beim Transport zu vermeiden, ist beispielsweise aus der EP 0 727 341 A1 eine Sicherungsvorrichtung bekannt, mit der die Bewegung eines Universalgelenks blockiert werden kann. Die bekannte Sicherungsvorrichtung weist ein langgestrecktes Riegelelement auf, welches an seinem hinteren Ende ein Handhabungsmittel aufweist und einen sich zum vorderen, freien Ende in Längsrichtung erstreckenden Blockierkörper, der zwischen der Innenseite eines Gabelarms der ersten Gelenkgabel und einem in der zweiten Gelenkgabel gelagerten Gelenkzapfen einsetzbar ist. Die lösbare Fixierung erfolgt mittels eines zum Blockierkörper in Querrichtung benachbarten, federnden Positionierelements, welches das Riegelelement durch Einrasten in Position hält.

Die bekannte Sicherungsvorrichtung ermöglicht jedoch ausschließlich die Blockierung sämtlicher Freiheitsgrade des Universalgelenks, und zwar lediglich bei im Wesentlichen rechtwinklig zueinander stehenden Wellenteilen. Dadurch ist es zum einen grundsätzlich nicht möglich, die Lenkzwischenwelle im Universalgelenk relativ zur Lenkspindel zu bewegen bzw. anzuwinkeln, wie dies in der Regel für die Montage in einem Kraftfahrzeug erforderlich ist. Dadurch wird die Kraftfahrzeugmontage erschwert. Zum anderen kann nicht die gesamte Montage in der abgewinkelten Stellung erfolgen, folglich muss die Sicherungsvorrichtung vor oder während der Montage entfernt werden, wodurch die genannten ungünstigen Winkelstellungen auftreten und dadurch Schäden verursacht werden können.

Angesichts der vorangehend erläuterten Problematik ist es eine Aufgabe der vorliegenden Erfindung, eine verbesserte Sicherungsvorrichtung insbesondere für eine Lenkwelle eines Kraftfahrzeugs zur Verfügung zu stellen, welche eine vereinfachte Montage ermöglicht und einen verbesserten Schutz gegen Beschädigungen bietet.

### Darstellung der Erfindung

Zur Lösung der vorgenannten Problematik wird erfindungsgemäß vorgeschlagen, dass das Riegelelement in Querrichtung beiderseits des Blockierkörpers jeweils ein Positionierelement aufweist.

Bei der Erfindung weist der Blockierkörper auf zwei gegenüberliegenden Außenseiten jeweils ein Positionierelement auf. Folglich kann der Blockierkörper in Querrichtung elastisch zwischen den federnden Positionierelementen gelagert in einem Universalgelenk aufgenommen werden. Hierzu wird das Riegelelement mit dem freien Ende voraus zwischen die gegenüberliegenden Gabelarme einer der beiden Gelenkgabeln eingesetzt, wobei die Außenseiten der Positionierelemente von innen gegen die Gelenkgabeln gerichtet sind. Die Abmessungen des Riegelelements werden so gewählt, dass die beiden Positionierelemente mit ihren vom Blockierkörper abgewandten Außenseiten an den gegeneinander gerichteten Innenseiten der gegenüberliegenden Gabelarme der Gelenkgabel anliegen. Dadurch, dass die Positionierelemente federnd ausgebildet sind, wirkt bei einer Verlagerung des Riegelelements in Richtung gegen einen der beiden Gabelarme die Federkraft als Rückstellkraft auf den Blockierkörper, welcher dadurch mittig zwischen den Gabelarmen ausgerichtet und positioniert wird. Diese Art der elastischen Selbstzentrierung ermöglicht es, den Blockierkörper in definierter Position innerhalb des Universalgelenks lösbar anzubringen und zu lagern, um dadurch die Bewegungsfreiheit des Universalgelenks durch den Blockierkörper gezielt zu beschränken.

Die Blockierwirkung wird durch den Blockierkörper dadurch ausgeübt, dass die Annäherung von Flächen der beiden Gelenkgabeln, die bei einer Verschwenkung um eine der Gelenkachsen gegeneinander bewegt werden, begrenzt wird. Der Blockierkörper dient dabei als Anschlag, der sich mit einer ersten Stützfläche an einer beweglichen Fläche der einen Gelenkgabel und mit einer zweiten Stützfläche an einer relativ zu der beweglichen Fläche feststehenden Fläche an der anderen Gelenkgabel abstützt. Hierzu kann gemäß der Erfindung vorgesehen sein, dass der Blockierkörper eine erste Stützfläche aufweist mit einer Flächennormalen, die in der Höhenrichtung senkrecht zur Längs- und Querrichtung steht, und eine zweite Stützfläche mit einer Flächennormalen, die entgegen der Höhenrichtung senkrecht zur Längs- und Querrichtung steht. Die erste bzw. zweite Stützfläche werden folglich gebildet durch die gegenüberliegenden Oberflächen des Blockierkörpers mit Flächennormalen, die in bzw. gegen die Höhenrichtung gerichtet sind, d.h. jeweils senkrecht zur Längs- und Querrichtung.

Wird definitionsgemäß festgelegt, dass die erste Stützfläche durch die Oberseite und die zweite Stützfläche durch die Unterseite des Blockierkörpers gebildet werden, können die beiden Flächen, auf denen sich die Positionierelemente befinden und die Flächennormalen in Querrichtung haben, als Seitenflächen betrachtet werden. Entsprechend wird das vordere freie Ende des Blockierkörpers in Längsrichtung durch die vordere Stirnfläche begrenzt, deren Flächennormale in Längsrichtung nach vorn weist.

Eine Blockierung des Universalgelenks in nur einem Freiheitsgrad der Bewegung kann dadurch erreicht werden, dass das Riegelelement zwischen dem Gabelgrund der ersten Gelenkgabel, von dem sich die ersten Gabelarme erstrecken, und dem Zapfenkreuz eingesetzt wird, so dass der Blockierkörper mit der einen Stützfläche auf seiner Unterseite am Gabelgrund anliegt. Die besagten ersten Gabelarme lagern die ersten Gelenkzapfen des Zapfenkreuzes drehbar um die erste Gelenkachse, die folglich in Querrichtung des eingesetzten Blockierelements verläuft. Wird nun versucht, das Universalgelenk um diese erste Gelenkachse zu verschwenken, nähert sich zwangsläufig einer der zweiten Gabelarme der zweiten Gelenkgabel dem Gabelgrund der ersten Gelenkgabel, und damit auch der Stützfläche auf der Oberseite des Blockierkörpers. Wird die Dicke des Blockierkörpers, die dem Abstand der beiden gegenüberliegenden Stützflächen voneinander entspricht, so bemessen, dass sie dem kürzesten Abstand zwischen dem Gabelgrund der ersten Gelenkgabel und den Gabelarmen der zweiten Gelenkgabel im geraden, d.h. unverschwenkten Zustand des Universalgelenks entspricht, stützt sich die zweite Gelenkgabel gegen eine Verschwenkung um die erste Gelenkachse auf der Oberseite des Blockierelements ab, welches seinerseits die dabei eingeleitete Kraft über seine Unterseite am Gabelgrund der ersten Gelenkgabel abstützt. Folglich wird die Bewegung des Universalgelenks um die erste Gelenkachse blockiert. Hingegen behalten bei einer Drehung der zweiten Gelenkgabel um die zweite Gelenkachse die Gabelarme denselben Abstand zum Gabelgrund der ersten Gelenkgabel, folglich wird keine Kraft auf den Blockierkörper ausgeübt und eine Verschwenkung um die zweite Gelenkachse bleibt möglich.

Um die Verschwenkung der Gelenkgabel zuverlässig zu beschränken, kann die Länge des Blockierkörpers größer gewählt werden als der Abstand der Gabelarme voneinander. Dadurch ist sichergestellt, dass die Gabelarme sich sicher am Blockierkörper abstützen können.

Ein Vorteil der erfindungsgemäßen Ausführung ist, dass der Blockierkörper in optimaler Position in dem Universalgelenk nach dem Einsetzen durch die Positionierelemente selbsttätig zwischen den Gabelarmen zentriert wird, so dass eine gezielte Blockierung eines einzelnen Freiheitsgrads der Bewegung erreicht werden kann. Dadurch wird die Montage gegenüber einer starren Blockierung des gesamten Gelenks erleichtert. Darüber hinaus werden die Gelenkgabeln durch das Riegelelement zuverlässig daran gehindert, durch ungünstige Winkelstellungen gegeneinander anzuschlagen und dabei beschädigt zu werden. Bei einer immer noch möglichen Drehung um die zweite Gelenkachse wird die Verdrehung nämlich dadurch begrenzt, dass die zweiten Gabelarme spätestens bei einer Verschwenkung um 90° seitlich gegen die Oberseite des Blockierelements anschlagen, und damit ebenfalls nicht in direkten Kontakt mit der ersten Gelenkgabel kommen können.

Es ist vorteilhaft, dass das Riegelelement spiegelsymmetrisch ausgebildet ist bezüglich einer Spiegelebene, welche den Blockierkörper in Längsrichtung schneidet und die in einer Höhenrichtung senkrecht zur Querrichtung liegt, und/oder spiegelsymmetrisch bezüglich einer zweiten Spiegelebene, welche den Blockierkörper in Längsrichtung schneidet und in Querrichtung liegt. Durch die spiegelsymmetrische Gestaltung bezüglich einer, bevorzugt zweier senkrecht zueinander stehender, das Riegelelement in Längsrichtung schneidender Spiegelebenen kann sichergestellt werden, dass ein unbeabsichtigtes falsches Einsetzen der Sicherungsvorrichtung praktisch ausgeschlossen ist und die erfindungsgemäße selbsttätige Zentrierung des Riegelelements zwischen den Gabelarmen gewährleistet ist.

Vorzugsweise ist der Blockierkörper quaderförmig ausgebildet mit einer vorgegebenen Länge in Längsrichtung, einer vorgegebenen Breite in Querrichtung und einer vorgegebenen Dicke in Höhenrichtung. Die Länge sollte größer oder gleich dem Abstand der Gabelarme des zu blockierenden Universalgelenks sein, so dass die Verschwenkung um beide Gelenkachsen begrenzt werden kann. Die Breite wird so gewählt, dass der Blockierkörper mit den beidseitigen Positionierelementen zwischen die Gabelarme eingesetzt werden kann. Die Dicke ist kleiner oder gleich dem freien Abstand zwischen dem Gabelgrund der einen Gelenkgabel und dem Zapfenkreuz bzw. den Gabelarmen der anderen Gelenkgabel.

Bei den üblichen Bauformen von Universalgelenken wird es in der Regel zweckmäßig sein, dass die Breite des Blockierkörpers größer ist als seine Dicke.

Eine vorteilhafte Ausführung der Erfindung sieht vor, dass das Riegelelement einen Grundkörper aufweist, von dem sich der Blockierkörper und die Positionierelemente zum freien Ende hin erstrecken. Der Grundkörper kann als Teil des Blockierkörpers ausgebildet sein oder in diesen übergehen. An dem Grundkörper hinten kann ein Handhabungsmittel angebracht sein. Der Grundkörper kann dazu dienen, die Positionierelemente relativ zum Blockierkörper zu positionieren. Beispielsweise können die Positionierelemente in Form von Blattfedern ausgebildet sein, die einseitig mit ihrem hinteren Ende an dem Grundkörper gehalten sind, und sich in Längsrichtung nach vorn jeweils mit Abstand im Wesentlichen parallel zum Blockierkörper erstrecken. Dadurch sind die Positionierelemente mit ihren freien Enden der Blattfedern zum freien Ende des Positionierelements bzw. Blockierkörpers gerichtet. Die freien Enden der Positionierelemente können in Querrichtung zum Blockierkörper federnd gegen die Seitenflächen des Blockierkörpers gebogen werden. Durch das elastische Zusammendrücken der Positionierelemente gegen den Blockierkörper wird die Breite des Riegelelements um den Abstand verkleinert, und so das Einsetzen des Riegelements erleichtert. Die derart ausgebildeten Positionierelemente sorgen für eine zuverlässige Positionierung. Derartige Blattfedern lassen sich überdies mit geringem Aufwand fertigen und an dem Grundkörper festlegen.

Eine vorteilhafte Ausführung sieht vor, dass die Sicherungsvorrichtung als einstückiges Kunststoffteil ausgebildet ist, bevorzugt als Kunststoff-Spritzgussteil. Kunststoffe können hinsichtlich ihrer Materialeigenschaften wie Härte, Festigkeit, Elastizität und dergleichen optimal an die zu erwartenden Anforderungen angepasst werden, beispielsweise können sie weicher als das Material der Gelenkbauteile sein, um Schäden zu vermeiden, und gleichzeitig fest genug, um beim Blockieren nicht zerquetscht zu werden oder zu brechen. Durch die Elastizität des Kunststoffmaterials können die erfindungsgemäßen Positionierelemente einfach und funktionssicher einstückig integriert werden. Darüber hinaus ist die Fertigung im Kunststoff-Spritzguss besonders rationell möglich.

Bevorzugt ist, dass zumindest eines der Positionierelemente auf seiner dem Blockierkörper abgewandten Außenseite zumindest ein an- oder eingeformtes Rastelement aufweist. Ein Rastelement kann beispielsweise durch einen außen am Positionierelement ausgebildeten Rastvorsprung oder-nocken realisiert werden. Beim Einsetzen kann ein Positionierelement durch die Federwirkung der Positionierelemente elastisch relativ zum Blockierelement bewegt werden und hinter einer Kante oder in einer Vertiefung einer Gelenkgabel einschnappen bzw. -rasten. Dadurch kann eine zuverlässige und dennoch leicht lösbare Fixierung der Sicherungsvorrichtung in einem Universalgelenk bewirkt werden. Gegebenenfalls können die Rastelemente auch Vertiefungen umfassen, die mit Vorsprüngen einer Gelenkgabel zusammenwirken können.

Eine Weiterbildung sieht vor, dass zwei Rastelemente mit Abstand in Längsrichtung zueinander angeordnet sind. Die Rastelemente können beispielsweise als Anformungen oder Vorsprünge ausgebildet sein, deren Abstand voneinander der Breite einer Gelenkgabel entspricht. Dadurch können die Positionierelemente in Längsrichtung positionsgenau eine Gelenkgabel zwischen sich aufnehmen bzw. an dieser einrasten, so dass eine eindeutige Positionierung der Sicherungsvorrichtung im Universalgelenk gewährleistet ist.

Weiterhin ist es vorteilhaft, dass zumindest ein Positionierelement zum freien Ende hin bezüglich der Längsrichtung auf den Blockierkörper zu abgeschrägt ausgebildet ist. Dadurch können die Enden der Positionierelemente in Längsrichtung zum freien Ende des Riegelelements hin pfeilförmig zusammenlaufen. Die derart gebildete Einführungsschräge erleichtert das Einsetzen zwischen die Gabelarme einer Gelenkgabel. In Querrichtung nach außen können die Positionierelemente ebenfalls angeschrägt oder abgerundet gestaltet sein, um das Einsetzen und Herausnehmen zu erleichtern.

Die Handhabungsmittel können ein Griffstück aufweisen. Das Griffstück kann beispielsweise als Griffring oder -knauf ausgeführt sein, der direkt oder über einen Schaft mit dem Blockierkörper beziehungsweise dem Grundkörper des Riegelelements verbunden sein kann. Das Griffstück kann ergonomisch günstig gestaltet werden, um ein einfaches und sicheres manuelles oder auch automatisiertes Einsetzen und Entfernen der Sicherungsvorrichtung zu ermöglichen. Das Griffstück kann einstückig mit dem Riegelelement ausgebildet sein, beispielsweise als Kunststoff-Spritzgussteil.

Erfindungsgemäß kann die Beweglichkeit gezielt gestaltet werden durch ein Verfahren zur zeitweiligen Einschränkung der Bewegungsfreiheit eines Universalgelenks durch Einsetzen einer Sicherungsvorrichtung, wobei das Universalgelenk umfasst:
- eine erste Gelenkgabel, mit zwei ersten Gabelarmen, die sich von einem ersten Gabelgrund erstrecken , sich radial gegenüberliegen und radial gegenüberliegende erste Lagerungen aufweisen,
- eine zweite Gelenkgabel, mit zwei zweiten Gabelarmen, die sich von einem zweiten Gabelgrund gegen die erste Gelenkgabel erstrecken , sich radial gegenüberliegen und radial gegenüberliegende zweite Lagerungen aufweisen,
- einem Zapfenkreuz mit kreuzförmig angeordneten Gelenkzapfen, wobei zwei erste Gelenkzapfen um eine erste Gelenkachse drehbar in den ersten Lagerungen der ersten Gelenkgabel gelagert sind, und zwei zweite Gelenkzapfen um eine zweite Gelenkachse drehbar in den zweiten Lagerungen der zweiten Gelenkgabel gelagert sind,
   und wobei die Sicherungsvorrichtung ein Riegelelement mit einem Blockierkörper aufweist, welcher quer zur Axialrichtung (Längsrichtung) der ersten Gelenkgabel lösbar eingesetzt wird
- zwischen den Gabelarmen der ersten Gelenkgabel, und
- zwischen dem Gabelgrund der ersten Gelenkgabel und dem Zapfenkreuz, derart, dass zumindest einer der zweiten Gabelarme bei einer Drehung um die erste Gelenkachse sich gegen den Blockierkörper abstützt und der Blockierkörper sich gegen den ersten Gabelgrund abstützt.

Durch das Verfahren wird die Verschwenkung der zweiten Gelenkgabel relativ zur ersten Gelenkgabel bezüglich einer Drehung um die erste Gelenkachse eingeschränkt bzw. blockiert, während die Verschwenkung um die zweite Gelenkachse weiterhin möglich bleibt. Durch eine erfindungsgemäße Sicherungsvorrichtung kann das Verfahren besonders anwendungsfreundlich und sicher realisiert werden. Hierzu wird eine Sicherungsvorrichtung vor dem Transport zur Montage in ein Universalgelenk eingesetzt und fixiert, was dank der Positionierelemente mit geringem Aufwand und hoher Sicherheit bewerkstelligt werden kann.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule in einer perspektivischen Gesamtansicht,
- Figur 2: eine erfindungsgemäße Sicherungsvorrichtung in einer perspektivischen Ansicht,
- Figur 3: die Sicherungsvorrichtung gemäß Figur 2 in einer Draufsicht,
- Figur 4: eine Detailansicht des Universalgelenks der Lenksäule gemäß Figur 1,
- Figur 5: einen Querschnitt durch das Universalgelenk gemäß Figur 4 mit eingesetzter Sicherungsvorrichtung,
- Figur 6: einen Längsschnitt durch das Universalgelenk gemäß Figur 4 mit eingesetzter Sicherungsvorrichtung,
- Figur 7: einen Längsschnitt durch das Universalgelenk wie in Figur 5 ohne Sicherungsvorrichtung,
- Figur 8: eine Detailansicht des Universalgelenks mit einer erfindungsgemäßen Sicherungsvorrichtung in einer zweiten Ausführungsform,
- Figur 9: eine erfindungsgemäße Sicherungsvorrichtung in der zweiten Ausführungsform in einer perspektivischen Ansicht,
- Figur 10: eine weitere Detailansicht des Universalgelenks mit einer erfindungsgemäßen Sicherungsvorrichtung in der zweiten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

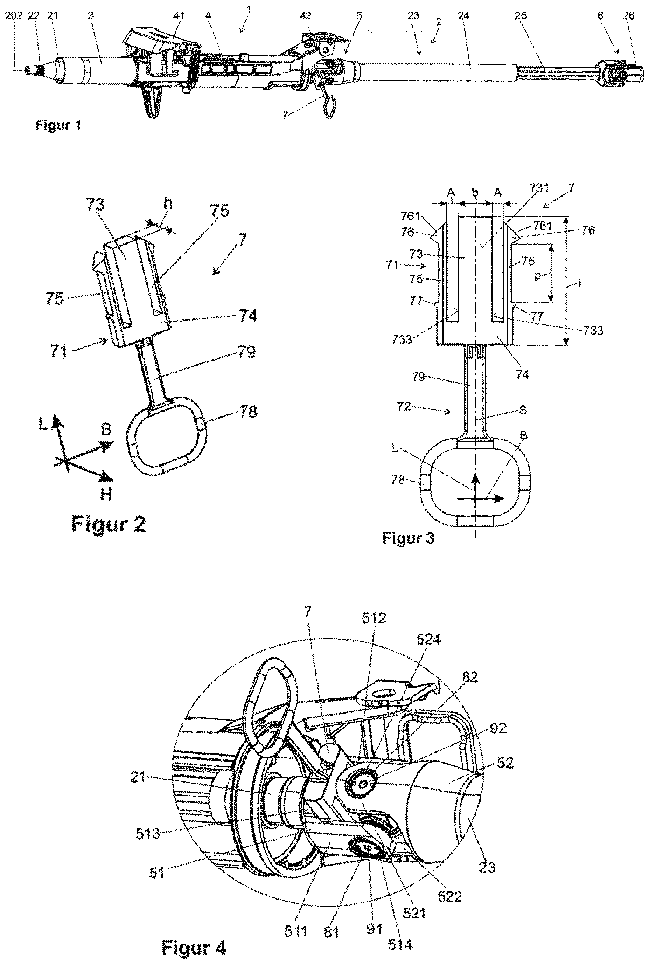

Figur 1 zeigt eine Lenksäule 1, die eine Lenkwelle 2 umfasst. Die Lenkwelle 2 weist eine Lenkspindel 21 auf, an deren bezogen auf die Fahrtrichtung hinteren Ende ein Befestigungsabschnitt 22 zur Anbringung eines hier nicht dargestellten Lenkrads eines Kraftfahrzeugs ausgebildet ist. Die Lenkspindel 21ist in einer Manteleinheit 3 um ihre Längsachse drehbar gelagert. Die Manteleinheit 3 ist in einer Trageinheit 4 gehaltert, welche Befestigungseinrichtungen 41, 42 aufweist zur Befestigung der Lenksäule 1 an einer nicht dargestellten Fahrzeugkarosserie.

Das bezogen auf die Fahrtrichtung vordere Ende der Lenkspindel 21steht vorne aus der Manteleinheit 3 vor und ist über eine Universalgelenk 5, auch als Kreuzgelenk bezeichnet, gelenkig mit einer Zwischenwelle 23 verbunden. Die Zwischenwelle 23 weist eine rohrförmige Außenwelle 24 auf, in der eine Innenwelle 25 drehmomentschlüssig in Längsrichtung teleskopierbar gelagert ist. Am vorderen Ende der Zwischenwelle 23 ist an der Innenwelle 25 ein weiteres Universalgelenk 6 angeordnet, welches die Zwischenwelle 23 gelenkig mit einem Kupplungsstück 26 zur drehmomentschlüssigen Verbindung mit einem hier nicht dargestellten Lenkgetriebe verbindet.

In das Universalgelenk 5 ist zur zeitweiligen Einschränkung der Beweglichkeit der Zwischenwelle 23 relativ zur Lenkspindel 21 eine erfindungsgemäße Sicherungsvorrichtung 7 eingesetzt, die in den Figuren 3 und 4 separat dargestellt ist.

Die Sicherungsvorrichtung 7 weist ein Riegelelement 71 auf, welches sich in einer Längsrichtung L erstreckt, und an dessen hinteren Ende ein Handhabungsmittel 72 angebracht ist.

Das Riegelelement 71 weist einen Blockierkörper 73 auf, welcher sich von einem Grundkörper 74 einstückig nach vorn erstreckt. Der Blockierkörper 73 hat eine quaderförmige Grundform, mit einer ersten Stützfläche 731, welche durch die in Figur 3 dem Betrachter zugewandte Oberseite gebildet wird, deren Flächennormale aus der Zeichenebene heraus in eine Höhenrichtung H weist, die senkrecht zur Längsrichtung L und Querrichtung B steht. Auf der in Figur 3 dem Betrachter abgewandten Seite ist eine der ersten Stützfläche 731 gegenüberliegende zweite Stützfläche 732 ausgebildet, deren Flächennormale entgegen der Höhenrichtung H weist. Der Abstand der parallel angeordneten Stützflächen 731 und 732 entspricht der Dicke h des Blockierkörpers 73. In Querrichtung B hat der Blockierkörper 73 eine Breite b; in Längsrichtung L hat der Blockierkörper 73 zusammen mit dem Grundkörper 74 eine Gesamtlänge I.

Zwei Positionierelemente 75 sind mit ihren hinteren Enden vorn an dem Grundkörper 74 angebracht und erstrecken sich in Längsrichtung L nach vorn im Wesentlichen parallel zu den Seitenflächen 733 und 734 des Blockierkörpers 73, und zwar mit einem Abstand A in Querrichtung B, d.h. senkrecht zur Längsrichtung L gemessen.
Die Positionierelemente 75 sind vorzugsweise einstückig mit dem Grundkörper 74 als Kunststoff-Formteil ausgebildet. Aufgrund der Elastizität des Kunststoffs bilden die Positionierelemente 75 Blattfedern, die mit ihren hinteren Enden am Grundkörper 74 festgelegt sind, und deren vordere Enden um den Abstand A federnd quer gegen den Blockierkörper 73 bewegt werden können.

Im Bereich ihrer vorderen Enden sind an den Positionierelementen 75 außen, d.h. auf ihren dem Blockierkörper 73 abgewandten Außenseiten, erste Rastelemente 76 in Form von Vorsprüngen oder Nocken angeformt. Die Rastelemente 76 stehen von den Positionierelementen 75 nach außen vor, und weisen Einführungsschrägen 761 auf, die nach vorn schräg auf den Blockierkörper 73 zulaufen. Dadurch bilden die beiden Einführungsschrägen 761 der beiden Positionierelemente 75 eine pfeilförmig nach vorn zusammenlaufende Anordnung.

Die Rastelemente 76 stehen von den Positionierelementen 75 bevorzugt maximal um den Betrag des Abstands A nach außen vor. Dadurch können die Positionierelemente 75 zum Einsetzen in Querrichtung B gegen den Blockierkörper 73 gebogen werden, um das Riegelelement 71 zwischen Gabelarme 511, 512 eines Universalgelenks 5 einzufügen, die in einem Abstand zueinander stehen, welcher der Breite des Riegelköpers 71 ohne die Rastelemente 76 in Querrichtung B über die Positionierelemente 75 gemessen entspricht.

Im Abstand p in Längsrichtung L zu den ersten Rastelementen 76 sind zweite Rastelemente 77 ebenfalls als Vorsprünge außen an die Positionierelemente 75 angeformt.

Das Handhabungsmittel 72 umfasst ein Griffstück 78, welches über einen Schaft 79 hinten an dem Blockierkörper 73 bzw. dessen Grundkörper 74 angebracht ist. Vorzugsweise ist das Handhabungsmittel 72 mit dem Riegelelement 71 einstückig ausgebildet, so dass die Sicherungsvorrichtung 7 insgesamt als einstückiges Kunststoff-Spritzgussteil gefertigt werden kann.

Die Sicherungsvorrichtung 7 ist in der dargestellten, bevorzugten Ausführung spiegelsymmetrisch zu einer Spiegelebene S ausgebildet, die in der Längsrichtung L und der Höhenrichtung H aufgespannt ist.

Die Sicherungsvorrichtung 7 ist in der dargestellten, bevorzugten Ausführung ebenfalls spiegelsymmetrisch zu einer Spiegelebene ausgebildet, die parallel zur Zeichenebene der Figur 3 in der Längsrichtung L und der Querrichtung B liegt.

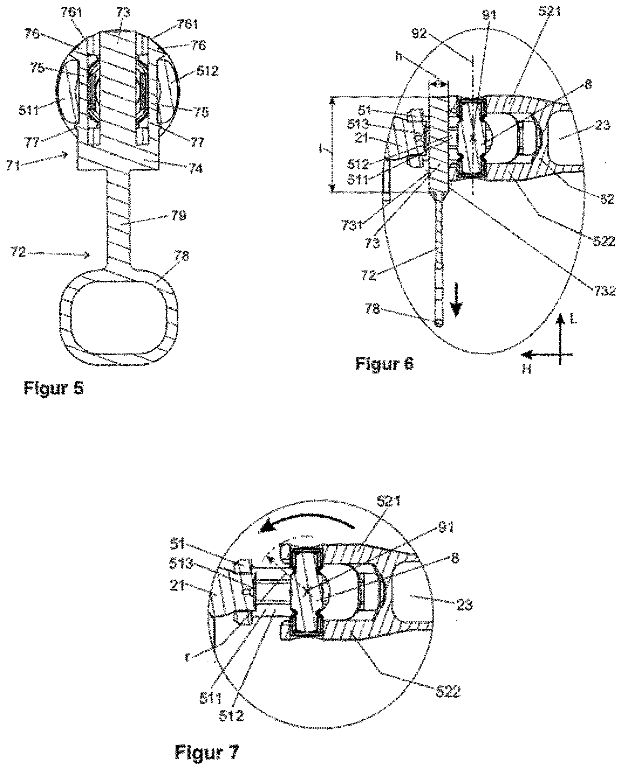

Figur 4 zeigt eine vergrößerte Ansicht des Universalgelenks 5 in einer perspektivischen Ansicht, Figur 5 zeigt einen Querschnitt in durch die eingesetzte Sicherungsvorrichtung 7 und Figur 6 einen Längsschnitt.

Das Universalgelenk 5 weist eine erste Gelenkgabel 51 auf, die an der Lenkspindel 21 angebracht ist und zwei gegenüberliegende erste Gabelarme 511 und 512 aufweist, die sich von einem ersten Gabelgrund 513 erstrecken. Die ersten Gabelarme 511 und 512 weisen miteinander fluchtende erste Lager 514 auf, in denen erste Lagerzapfen 81 eines Zapfenkreuzes 8 um eine erste Gelenkachse 91 drehbar gelagert sind.

Das Universalgelenk 5 weist eine zweite Gelenkgabel 52 auf, die an der Zwischenwelle 23 angebracht ist und zwei gegenüberliegende zweite Gabelarme 521 und 522 aufweist, die sich von einem zweiten Gabelgrund 523 erstrecken. Die zweiten Gabelarme 521 und 522 weisen miteinander fluchtende zweite Lager 524 auf, in denen zweite Lagerzapfen 82 eines Zapfenkreuzes 8 um eine zweite Gelenkachse 92 drehbar gelagert sind.

Die erste Gelenkachse 91 und die zweite Gelenkachse 92 stehen zueinander senkrecht und liegen in derselben Ebene des Zapfenkreuzes 9.

Wie aus Figuren 5 und 6 entnehmbar ist, ist das Riegelelement 71 der Sicherungsvorrichtung 7 in die erste Gelenkgabel 51 zwischen die Gabelarme 511 und 512 eingesetzt, so dass diese von außen an den Positionierelementen 75 anliegen. Figur 5 ist entnehmbar, dass die Breite der Gabelarme 511 und 512 dem Abstand p der Rastelemente 76 und 77 voneinander entspricht. Dadurch ist das Riegelelement 71 in Längsrichtung L an den Gabelarmen 511 und 512 fixiert. Dadurch, dass die Positionierelemente 75 federnd relativ zum Blockierkörper 73 angebracht sind, sorgen sie dafür dass der Blockierkörper 73 durch die Federkraft in Querrichtung B selbsttätig zwischen den Gabelarmen 511 und 512 zentriert wird.

Figur 6 zeigt, dass der Blockierkörper 73 mit seiner ersten Stützfläche 731 am ersten Gabelgrund 513 anliegt, bzw. sich gegen diesen abstützt. Mit der zweiten Stützfläche 732 liegt der Blockierkörper 73 mit geringem Spiel gegen die gelenkseitigen Enden der zweiten Gabelarme 521 und 522 an. Aus dieser Darstellung ist erkennbar, dass die Länge I des Blockierkörpers 73 zumindest dem außen gemessenen Abstand der zweiten Gabelarme 521 und 522 entspricht. Dadurch liegt der Blockierkörper 73 in eingesetztem Zustand immer zwischen den zweiten Gabelarmen 521 und 522 und dem ersten Gabelgrund 513.

Wird bei eingesetzter Sicherungsvorrichtung 7 versucht, die Zwischenwelle 23 gegenüber der Lenkspindel 21 um die erste Gelenkachse 91 zu drehen, d.h. zu verschwenken, schlägt zumindest einer der zweiten Gabelarme 521 oder 522 an der Stützfläche 732 des Blockierkörpers 73 an, der sich dagegen an dem ersten Gabelgrund 513 abstützt. Dadurch wird die Verschwenkung um die erste Gelenkachse 91 blockiert. Hingegen ist eine Verschwenkung um die zweite Gelenkachse 92 weiterhin möglich, weil dabei aufgrund der gerundeten Gestaltung der Gabelarme 521 und 522 keine Kraft auf den Blockierkörper 73 ausgeübt wird.

Dank der Zentrierung des Blockierkörpers 73 durch die erfindungsgemäß auf gegenüberliegenden Seiten federnd angebrachten Positionierelemente 75 wird der Blockierkörper 73 zuzwischen den ersten Gabelarmen 511 und 512 zuverlässig parallel zur zweiten Gelenkachse 92 positioniert, so dass die zweiten Gabelarme 521 und 522 sicher gestützt werden und somit die gewünschte Bewegungseinschränkung gewährleistet ist.

Wie in Figur 6 mit dem Pfeil angedeutet, kann die Sicherungsvorrichtung 7 an dem Griffstück 78 des Handhabungsmittels 72 aus dem Universalgelenk 5 einfach herausgezogen werden. Dies ist möglich, weil die Positionierelemente 75 elastisch so gegen den Blockierkörper 73 gebogen werden können, dass die Rastelemente 76 zwischen den Gabelarmen 511 und 512 hindurchgleiten können. Das Einsetzen der Sicherungsvorrichtung 7 wird durch die Einführungsschrägen 761 erleichtert, die eine Beschädigung der Positionierelemente 75 verhindern und für ein selbsttägiges Einrasten sorgen.

Wenn die Sicherungsvorrichtung 7 entnommen ist, wird wieder eine volle Verschwenkbarkeit um die erste Gelenkachse 91 freigegeben, wie dies in Figur 7 mit dem gebogenen Pfeil dargestellt ist. Aus dieser Darstellung ist ebenfalls deutlich entnehmbar, wie die zweiten Gabelarme 521 und 522 beim Verschwenken um die erste Gelenkachse durch einen gestrichelt angedeuteten Raumbereich mit dem Radius r bewegt werden. Dieser Raumbereich wird beim erfindungsgemäßen Verfahren durch den Blockierkörper 73 ausgefüllt bzw. belegt, so dass gezielt die Beweglichkeit um die erste Gelenkachse 91 eingeschränkt wird.

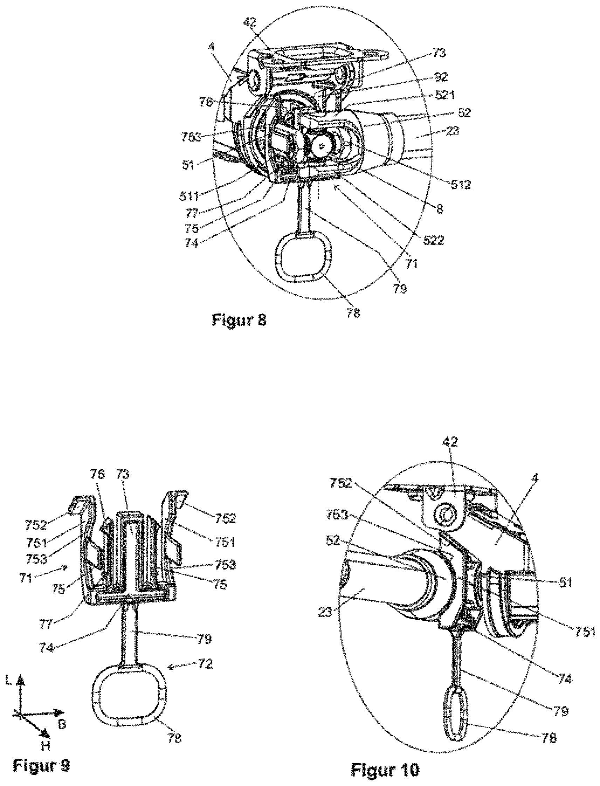

In den Figuren 8 bis 10 ist eine zweite Ausführungsform der erfindungsgemäßen Sicherungsvorrichtung 7 dargestellt. Das Riegelelement 71 der Sicherungsvorrichtung 7 ist in die erste Gelenkgabel 51 zwischen die Gabelarme 511 und 512 eingesetzt, so dass diese von außen an den Positionierelementen 75 anliegen. Dadurch, dass die Positionierelemente 75 federnd relativ zum Blockierkörper 73 angebracht sind, sorgen sie dafür, dass der Blockierkörper 73 durch die Federkraft in Querrichtung B selbsttätig zwischen den Gabelarmen 511 und 512 zentriert wird.

Ausgehend vom Grundkörper 74 erstrecken sich in Längsrichtung L zwei Abstützelemente 751 parallel zu den Positionierelementen 75. In der Figur 8 ist die Sicherungsvorrichtung 7 in der Gelenkgabel 51 der Lenksäule eingesteckt, wobei zwischen dem einen Abstützelement 751 und der Positionierelement 75 der Gabelarm 511 aufgenommen ist und zwischen dem anderen Abstützelement 751 und dem anderen Positionierelement 75 der Gabelarm 512 aufgenommen ist. Die Abstützelemente 751 weisen an ihrem freien Ende einen Kontaktabschnitt 752 auf, der mit einer karosseriefesten Lenksäulenkomponente in Wirkverbindung steht. Beispielsweise steht der Kontaktabschnitt 752 mit der Trageinheit 4 der Lenksäule 1 in Kontakt und stützt sich bei einer Verdrehung der Lenkspindel 21 an der Trageinheit 4 ab und verhindert dadurch eine Rotation der Lenkspindel 21 um ihre Rotationsachse (Längsachse) 202. Somit kann mit der erfindungsgemäßen Sicherungsvorrichtung 7 nicht nur die Bewegungsfreiheit des Universalgelenks 5 eingeschränkt werden, sondern gleichzeitig auch die Rotation der Lenkspindel 21 bzw. der Lenkwelle 2 verhindert werden. Dadurch kann auf eine separate Verdrehsicherung verzichtet werden.

Weiterhin weisen die Abstützelemente 751 jeweils einen Anlageabschnitt 753 auf, wobei dieser Anlageabschnitt 753 so ausgebildet ist, dass die Verschwenkung der Gelenkgabel 52 um die zweite Gelenkachse 92 auf einen Winkelbereich beschränkt ist. Wie in der Figur 8 und 10 zu erkennen ist, wird die Verschwenkung auf ±90° um die zweite Gelenkachse 92 beschränkt, wobei die Gelenkgabel 52 an dem einen Anlageabschnitt 753 des Abstützelements 751 anschlägt und somit eine weitergehende Verschwenkung verhindert wird. Der Anlageabschnitt 753 ist als bogenförmige Vertiefung im Randbereich des Abstützelements 751 ausgebildet, so dass diese mit der äußeren Anschlaggeometrie der Gelenkgabel 52 korrespondiert.

**Bezugszeichenliste**

| | | | |
|---|---|---|---|
| 1 | Lenksäule | 73 | Blockierkörper |
| 2 | Lenkwelle | 731,732 | Stützflächen |
| 21 | Lenkspindel | 733,734 | Seitenflächen |
| 22 | Befestigungsabschnitt | 74 | Grundkörper |
| 23 | Zwischenwelle | 75 | Positionierelemente |
| 24 | Außenwelle | 751 | Abstützelemente |
| 25 | Innenwelle | 752 | Kontaktabschnitt |
| 26 | Kupplungsstück | 753 | Anlageabschnitt |
| 202 | Rotationsachse | 76, 77 | Rastelemente |
| 3 | Manteleinheit | 761 | Einführungsschrägen |
| 4 | Trageinheit | 78 | Griffstück |
| 41, 42 | Befestigungeinrichtungen | 79 | Schaft |
| 5 | Universalgelenk | 8 | Zapfenkreuz |
| 51 | Gelenkgabel | 81 | Lagerzapfen |
| 511,512 | Gabelarme | 91 | erste Gelenkachse |
| 514 | Lager | 92 | zweite Gelenkachse |
| 513 | Gabelgrund | L | Längsrichtung |
| 52 | Gelenkgabel | B | Querrichtung |
| 521,522 | Gabelarme | H | Höhenrichtung |
| 523 | Gabelgrund | A | Abstand |
| 524 | Lager731 | S | Spiegelebene |
| 6 | Universalgelenk | l | Länge |
| 7 | Sicherungsvorrichtung | b | Breite |
| 71 | Riegelelement | h | Dicke |
| 72 | Handhabungsmittel | r | Radius |

## Patentansprüche

1. Sicherungsvorrichtung (7) zur zeitweiligen Einschränkung der Bewegungsfreiheit eines Universalgelenks (5) einer Wellenanordnung (21, 23) einer Lenksäule (1), umfassend ein Riegelelement (71), welches sich in einer Längsrichtung (L) erstreckt und in Längsrichtung (L) vorne ein freies vorderes Ende aufweist, und an dem in Längsrichtung hinten ein Handhabungsmittel (72) angeordnet ist,
wobei das Riegelelement (71) einen Blockierkörper (73) aufweist und mindestens ein Positionierelement (75), welches sich benachbart zum Blockierkörper (73) in Längsrichtung (L) erstreckt und in einer Querrichtung (B) quer zur Längsrichtung relativ zum Blockierkörper (73) federnd ausgebildet ist,
**dadurch gekennzeichnet,**
**dass** das Riegelelement (71) in Querrichtung beiderseits des Blockierkörpers (73) jeweils mindestens ein Positionierelement (75) aufweist.

2. Sicherungsvorrichtung nach Anspruch 1, **dadurch gekennzeichnet, dass** der Blockierkörper (73) eine erste Stützfläche (731) aufweist mit einer Flächennormalen, die in der Höhenrichtung (H) senkrecht zur Längs- und Querrichtung steht, und eine zweite Stützfläche (732) mit einer Flächennormalen, die entgegen der Höhenrichtung (H) senkrecht zur Längs- und Querrichtung steht.

3. Sicherungsvorrichtung nach einem der vorangehenden Ansprüche, **dadurch gekennzeichnet, dass** das Riegelelement (71) spiegelsymmetrisch ausgebildet ist bezüglich einer Spiegelebene (S), welche den Blockierkörper (73) in Längsrichtung (L) schneidet und die in einer Höhenrichtung (H) senkrecht zur Querrichtung (B) liegt, und/oder einer zweiten Spiegelebene, welche den Blockierkörper (73) in Längsrichtung (L) schneidet und in Querrichtung (B) liegt.

4. Sicherungsvorrichtung nach einem der vorangehenden Ansprüche, **dadurch gekennzeichnet, dass** der Blockierkörper (73) quaderförmig ausgebildet ist mit einer vorgegebenen Länge (l) in Längsrichtung (L), einer vorgegebenen Breite (b) in Querrichtung (B) und einer vorgegebenen Dicke (h) in Höhenrichtung (H).

5. Sicherungsvorrichtung nach einem der vorangehenden Ansprüche, **dadurch gekennzeichnet, dass** das Riegelelement (73) einen Grundkörper (74) aufweist, von dem sich der Blockierkörper (73) und die Positionierelemente (75) erstrecken.

6. Sicherungsvorrichtung nach einem der vorangehenden Ansprüche, **dadurch gekennzeichnet, dass** zumindest eines der Positionierelemente (75) auf seiner dem Blockierkörper (73) abgewandten Außenseite zumindest ein ein- oder angeformtes Rastelement (76, 77) aufweist.

7. Sicherungsvorrichtung nach Anspruch 6, **dadurch gekennzeichnet, dass** zwei Rastelemente (76, 77) mit Abstand in Längsrichtung (L) zueinander angeordnet sind.

8. Sicherungsvorrichtung nach einem der vorangehenden Ansprüche, **dadurch gekennzeichnet, dass** zumindest ein Positionierelement (75) zum freien Ende hin bezüglich der Längsrichtung (L) auf den Blockierkörper (73) zu abgeschrägt ausgebildet ist.

9. Sicherungsvorrichtung nach einem der vorangehenden Ansprüche, **dadurch gekennzeichnet, dass** die Handhabungsmittel (72) ein Griffstück (78) aufweisen.

10. Verfahren zur zeitweiligen Einschränkung des Bewegungsfreiheit eines Universalgelenks (5) durch Einsetzen einer Sicherungsvorrichtung (7), wobei das Universalgelenk (5) umfasst:
- eine erste Gelenkgabel (51), mit zwei ersten Gabelarmen (511, 512), die sich von einem ersten Gabelgrund (513) erstrecken , sich radial gegenüberliegen und radial gegenüberliegende erste Lagerungen (514) aufweisen,
- eine zweite Gelenkgabel (52), mit zwei zweiten Gabelarmen (521, 522), die sich von einem zweiten Gabelgrund (523) in gegen die erste Gelenkgabel (51) erstrecken , sich radial gegenüberliegen und radial gegenüberliegende zweite Lagerungen (524) aufweisen,
- einem Zapfenkreuz (8) mit kreuzförmig angeordneten Gelenkzapfen (81, 82), wobei zwei erste Gelenkzapfen (81) um eine erste Gelenkachse (91) drehbar in den ersten Lagerungen (514) der ersten Gelenkgabel (51) gelagert sind, und zwei zweite Gelenkzapfen (82) um eine zweite Gelenkachse (92) drehbar in den zweiten Lagerungen (524) der zweiten Gelenkgabel (52) gelagert sind,
und wobei die Sicherungsvorrichtung (7) ein Riegelelement (71) mit einem Blockierkörper (73) aufweist,
welcher quer zur Axialrichtung der ersten Gelenkgabel lösbar eingesetzt wird
- zwischen den Gabelarmen (511, 512) der ersten Gelenkgabel (51) und
- zwischen dem Gabelgrund (513) der ersten Gelenkgabel (51) und dem Zapfenkreuz (9), derart, dass einer der zweiten Gabelarme (521, 522) bei einer Drehung um die erste Gelenkachse (91) sich gegen den Blockierkörper (73) abstützt und der Blockierkörper (73) sich gegen den ersten Gabelgrund (513) abstützt.

## Claims

1. Securing device (7) for temporarily limiting the freedom of movement of a universal joint (5) of a shaft arrangement (21, 23) of a steering column (1), comprising a locking element (71), which extends in a longitudinal direction (L) and has a free, front end at the front, as seen in the longitudinal direction (L), and on which a handling means (72) is arranged at the rear, as seen in the longitudinal direction,
wherein the locking element (71) has a blocking body (73) and at least one positioning element (75), which extends in the longitudinal direction (L) adjacent to the blocking body (73) and is designed to be resilient relative to the blocking body (73) in a transverse direction (B) transverse to the longitudinal direction, **characterized in that** the locking element (71) has in each case at least one positioning element (75) on either side of the blocking body (73), as seen in the transverse direction.

2. Securing device according to Claim 1, **characterized in that** the blocking body (73) has a first supporting surface (731), with a surface normal which runs in the height direction (H) perpendicular to the longitudinal and transverse directions, and a second supporting surface (732), with a surface normal which runs counter to the height direction (H) perpendicular to the longitudinal and transverse directions.

3. Securing device according to one of the preceding claims, **characterized in that** the locking element (71) is designed to be mirror-symmetrical in relation to a mirror plane (S) which intersects the blocking body (73) in the longitudinal direction (L), and runs in a height direction (H) perpendicular to the transverse direction (B), and/or a second mirror plane, which intersects the blocking body (73) in the longitudinal direction (L) and runs in the transverse direction (B).

4. Securing device according to one of the preceding claims, **characterized in that** the blocking body (73) is of cuboidal design with a predetermined length (1) in the longitudinal direction (L), a predetermined width (b) in the transverse direction (B) and a predetermined thickness (h) in the height direction (H).

5. Securing device according to one of the preceding claims, **characterized in that** the locking element (73) has a main body (74), from which the blocking body (73) and the positioning elements (75) extend.

6. Securing device according to one of the preceding claims, **characterized in that** at least one of the positioning elements (75) has at least one latching element (76, 77) formed in or on its outer side, which is directed away from the blocking body (73).

7. Securing device according to Claim 6, **characterized in that** two latching elements (76, 77) are spaced apart from one another in the longitudinal direction (L).

8. Securing device according to one of the preceding claims, **characterized in that**, in the direction of the free end, at least one positioning element (75) is designed to be beveled toward the blocking body (73), as seen in relation to the longitudinal direction (L).

9. Securing device according to one of the preceding claims, **characterized in that** the handling means (72) has a gripping piece (78).

10. Method for temporarily limiting the freedom of movement of a universal joint (5) by the insertion of a securing device (7), wherein the universal joint (5) comprises:
- a first joint fork (51), having two first fork arms (511, 512) which extend from a first fork base (513), are located radially opposite one another and have radially opposite first bearing means (514),
- a second joint fork (52), having two second fork arms (521, 522) which extend into toward the first joint fork (51) from a second fork base (523), are located radially opposite one another and have radially opposite second bearing means (524),
- a cardan spider (8) having joint pins (81, 82) arranged in a cross-form manner, wherein two first joint pins (81) are mounted in the first bearing means (514) of the first joint fork (51) such that they can be rotated about a first joint axis (91), and two second joint pins (82) are mounted in the second bearing means (524) of the second joint fork (52) such that they can be rotated about a second joint axis (92),
and wherein the securing device (7) has a locking element (71) with a blocking body (73), which is inserted in a releasable manner, in a direction transverse to the axial direction of the first joint fork,
- between the arms (511, 512) of the first joint fork (51), and
- between the base (513) of the first joint fork (51) and the cardan spider (9) such that, during rotation about the first joint axis (91), one of the second fork arms (521, 522) is supported against the blocking body (73) and the blocking body (73) is supported against the first fork base (513).

## Revendications

1. Dispositif de sécurité (7) pour limiter temporairement la liberté de mouvement d'un joint universel (5) d'un agencement d'arbre (21, 23) d'une colonne de direction (1), comprenant un élément de verrou (71) qui s'étend dans une direction longitudinale (L) et qui présente dans la direction longitudinale (L), à l'avant, une extrémité libre avant, et sur lequel est disposé, dans la direction longitudinale, à l'arrière, un moyen de manipulation (72),
l'élément de verrou (71) présentant un corps de blocage (73) et au moins un élément de positionnement (75) qui s'étend dans la direction longitudinale (L) à côté du corps de blocage (73) et qui est réalisé de manière élastique dans une direction transversale (B) transversalement à la direction longitudinale par rapport au corps de blocage (73),
**caractérisé en ce que**
l'élément de verrou (71) présente, dans la direction transversale, des deux côtés du corps de blocage (73), à chaque fois au moins un élément de positionnement (75).

2. Dispositif de sécurité selon la revendication 1, **caractérisé en ce que** le corps de blocage (73) présente une première surface d'appui (731) avec une normale à la surface qui, dans la direction de la hauteur (H), est perpendiculaire à la direction longitudinale et à la direction transversale, et une deuxième surface d'appui (732) avec une normale à la surface qui, dans la direction inverse de la direction de la hauteur (H), est perpendiculaire à la direction longitudinale et à la direction transversale.

3. Dispositif de sécurité selon l'une quelconque des revendications précédentes, **caractérisé en ce que** l'élément de verrou (71) est réalisé avec une symétrie spéculaire par rapport à un plan miroir (S) qui coupe le corps de blocage (73) dans la direction longitudinale (L) et qui est situé dans une direction de la hauteur (H) perpendiculairement à la direction transversale (B), et/ou à un deuxième plan miroir qui coupe le corps de blocage (73) dans la direction longitudinale (L) et est situé dans la direction transversale (B).

4. Dispositif de sécurité selon l'une quelconque des revendications précédentes, **caractérisé en ce que** le corps de blocage (73) est réalisé sous forme parallélépipédique avec une longueur prédéfinie (1) dans la direction longitudinale (L), une largeur prédéfinie (b) dans la direction transversale (B) et une épaisseur prédéfinie (h) dans la direction de la hauteur (H).

5. Dispositif de sécurité selon l'une quelconque des revendications précédentes, **caractérisé en ce que** l'élément de verrou (73) présente un corps de base (74) depuis lequel s'étendent le corps de blocage (73) et les éléments de positionnement (75).

6. Dispositif de sécurité selon l'une quelconque des revendications précédentes, **caractérisé en ce qu'**au moins l'un des éléments de positionnement (75) présente, sur son côté extérieur opposé au corps de blocage (73), au moins un élément d'encliquetage (76, 77) formé dans ou sur celui-ci.

7. Dispositif de sécurité selon la revendication 6, **caractérisé en ce que** deux éléments d'encliquetage (76, 77) sont disposés à distance l'un de l'autre dans la direction longitudinale (L).

8. Dispositif de sécurité selon l'une quelconque des revendications précédentes, **caractérisé en ce qu'**au moins un élément de positionnement (75) est réalisé sous forme oblique vers l'extrémité libre par rapport à la direction longitudinale (L) vers le corps de blocage (73).

9. Dispositif de sécurité selon l'une quelconque des revendications précédentes, **caractérisé en ce que** les moyens de manipulation (72) présentent une poignée (78).

10. Procédé pour limiter temporairement la liberté de mouvement d'un joint universel (5) par insertion d'un dispositif de sécurité (7), le joint universel (5) comprenant :
- une première fourche d'articulation (51) avec deux premiers bras de fourche (511, 512) qui s'étendent depuis une première base de fourche (513), sont opposés radialement et présentent des premiers supports sur palier radialement opposés (514),
- une deuxième fourche d'articulation (52) avec deux deuxièmes bras de fourche (521, 522) qui s'étendent depuis une deuxième base de fourche (523) dans vers la première fourche d'articulation (51), sont opposés radialement et présentent des deuxièmes supports sur palier radialement opposés (524),
- un croisillon de cardan (8) avec des tourillons d'articulation (81, 82) disposés en forme de croix, deux premiers tourillons d'articulation (81) étant supportés de manière à pouvoir tourner autour d'un premier axe d'articulation (91) dans les premiers supports sur palier (514) de la première fourche d'articulation (51), et deux deuxièmes tourillons d'articulation (82) étant supportés de manière à pouvoir tourner autour d'un deuxième axe d'articulation (92) dans les deuxièmes supports sur palier (524) de la deuxième fourche d'articulation (52),
et le dispositif de sécurité (7) présentant un élément de verrou (71) avec un corps de blocage (73),
qui est inséré de manière amovible transversalement à la direction axiale de la première fourche d'articulation
- entre les bras de fourche (511, 512) de la première fourche d'articulation (51) et
- entre la base de fourche (513) de la première fourche d'articulation (51) et le croisillon de cardan (9) de telle sorte que l'un des deux bras de fourche (521, 522), lors d'une rotation autour du premier axe d'articulation (91), s'appuie contre le corps de blocage (73) et que le corps de blocage (73) s'appuie contre la première base de fourche (513).
